# EUROPEAN PATENT APPLICATION

(11) **EP 4 224 385 A1**
(43) Date of publication of application: **09.08.2023**
(21) Application number: 23154005.5
(22) Date of filing: 30.01.2023
(51) Int. Cl.: G06Q 10/02, G06Q 50/32

(54) **PRESENTATION DEVICE, PRESENTATION METHOD AND PRESENTATION PROGRAM**

(30) Priority: 02.02.2022 JP 2022015047
(71) Applicant: TOYOTA JIDOSHA KABUSHIKI KAISHA, Aichi-Ken 471-8571 (JP)
(72) Inventor: YOKOYAMA, Daiki, Toyota-shi 471-8571 (JP); CHIBA, Hiroya, Toyota-shi 471-8571 (JP); KAGEURA, Yoshiyuki, Toyota-shi 471-8571 (JP); SHIMADA, Masanori, Toyota-shi 471-8571 (JP); SAKAYANAGI, Yoshihiro, Toyota-shi 471-8571 (JP); MORITA, Hiroki, Toyota-shi 471-8571 (JP)
(74) Representative: D Young & Co LLP

(57) **Abstract**

A presentation device used for selecting a vehicle (10) in a vehicle dispatch service, comprises: a travel route specifying unit (331) for specifying a scheduled travel route of each vehicle according to a vehicle dispatch request from a user; a vehicle specifying unit (332) for specifying a vehicle (10) as a reservation candidate vehicle, only when the vehicle is an EV compatible vehicle capable of EV running using a motor powered by a battery, if the specified scheduled travel route of each vehicle (10) includes an area in which driving of an internal combustion engine is prohibited or restricted; and a vehicle presentation unit (334) for presenting the specified reservation candidate vehicle to a user through a user terminal.

## Description

### FIELD

The present disclosure relates to a presentation device, a presentation method, and a presentation program used for selecting vehicles in a vehicle dispatch service.

### Background of the Invention

### BACKGROUND

In recent years, in order to reduce air pollution, areas in which driving of an internal combustion engine is prohibited or restricted during traveling of a vehicle are provided in places such as urban areas having a large traffic volume. In such areas, basically, traveling in an EV mode is performed by using only a motor supplied with electric power from a battery as a drive source.

In this regard, JP 07-075210 A1 describes that, when it is determined that a position of the hybrid-vehicle is within the air pollution prevention intensified area, the internal combustion engine is stopped and traveling in the EV mode is performed.

A vehicle dispatch service that arranges vehicles in response to a user's request has become popular. When using a vehicle dispatch service, the user can select a desired vehicle from available reservation candidate vehicles. However, when vehicles that are not suitable for traveling in the EV mode are dispatched to the user, it is difficult to travel in an area where driving with an internal combustion engine is prohibited or restricted, and the traveling area of the user may be limited.

In view of the above problems, it is an object of the present disclosure to present a user with candidate vehicles suitable for the user's scheduled travel route when the vehicle dispatch service is used by the user.

### SUMMARY

The gist of the present disclosure is as follows.
(1) A presentation device used for selecting a vehicle in a vehicle dispatch service, the device comprising:
   a travel route specifying unit for specifying a scheduled travel route of each vehicle according to a vehicle dispatch request from a user;
   a vehicle specifying unit for specifying a vehicle as a reservation candidate vehicle, only when the vehicle is an EV compatible vehicle capable of EV running using a motor powered by a battery, if the specified scheduled travel route of each vehicle includes an area in which driving of an internal combustion engine is prohibited or restricted; and
   a vehicle presentation unit for presenting the specified reservation candidate vehicle to a user through a user terminal.
(2) The presentation device according to above (1), wherein the travel route specifying unit specifies a plurality of the scheduled travel routes for each vehicle, and
   when the area is included in all the scheduled travel routes of each vehicle, the vehicle specifying unit specifies the vehicle as a reservation candidate vehicle, only when the vehicle is an EV compatible vehicle.
(3) The presentation device according to above (1) or (2), wherein the travel route specifying unit specifies a plurality of the scheduled travel routes for each vehicle, and
   when the area is not included in a part of the scheduled travel routes, the vehicle specifying unit specifies the vehicle as a reservation candidate vehicle, even if the vehicle is not an EV compatible vehicle.
(4) The presentation device according to any one of above (1) to (3), further comprising a presentation mode specifying unit for specifying a presentation mode of the reservation candidate vehicle, wherein
   the vehicle presentation unit presents the reservation candidate vehicle based on the specified presentation mode, and
   the presentation mode specifying unit specifies the presentation mode so as to preferentially present a chargeable vehicle capable of charging a battery, which supplies power to the motor, by an external power source, if the area is included in the scheduled travel route of the vehicle, compared to if the area is not included in the scheduled travel route of the vehicle.
(5) The presentation device according to any one of above (1) to (4), further comprising a presentation mode specifying unit for specifying a presentation mode of the reservation candidate vehicle, wherein
   the vehicle presentation unit presents the reservation candidate vehicle based on the specified presentation mode, and
   the presentation mode specifying unit specifies the presentation mode so as to preferentially present an EV compatible vehicle having a longer travelable distance by the motor depending on the remaining amount of power, if the area is included in the scheduled travel route of the vehicle, compared to if the area is not included in the scheduled travel route of the vehicle.
(6) The presentation device according to above (5), further comprising a travelable distance calculation unit for calculating an estimated value of distance travelable by the motor when the user starts using the EV compatible vehicle, as a distance travelable by the motor.
(7) The presentation device according to above (6), wherein the travelable distance calculation unit calculates an estimated value of the remaining amount of power of the battery at a start of use of the EV compatible vehicle by the user by subtracting an amount of electric power consumed until the start of use from a present remaining amount of power of a battery of the EV compatible vehicle, and an estimated value of distance travelable by the motor at the start of use of the EV compatible vehicle is calculated based on the calculated estimated value of the remaining amount of power.
(8) The presentation device according to any one of above (1)-(7), further comprising a presentation mode specifying unit for specifying a presentation mode of the reservation candidate vehicle, wherein
   the vehicle presentation unit presents the reservation candidate vehicle based on the specified presentation mode, and
   the presentation mode specifying unit specifies the presentation mode so as to preferentially present the EV compatible vehicle having a longer travelable distance by the motor when the battery is fully charged, if the area is included in the scheduled travel route of the vehicle, compared to if the area is not included in the scheduled travel route of the vehicle.
(9) A presentation method used for selecting a vehicle in a vehicle dispatch service, the method comprising:
   specifying a scheduled travel route of each vehicle according to a vehicle dispatch request from a user;
   specifying a vehicle as a reservation candidate vehicle, only when the vehicle is an EV compatible vehicle capable of EV running using only a motor powered by a battery, if the specified scheduled travel route of each vehicle includes an area in which driving of an internal combustion engine is prohibited or restricted; and
   presenting the specified reservation candidate vehicle to a user via a user terminal.
(10) A presentation program used for selecting a vehicle in a vehicle dispatch service, causing a computer to execute:
   specifying a scheduled travel route of each vehicle according to a vehicle dispatch request from a user;
   specifying a vehicle as a reservation candidate vehicle, only when the vehicle is an EV compatible vehicle capable of EV running using only a motor powered by a battery, if the specified scheduled travel route of each vehicle includes an area in which driving of an internal combustion engine is prohibited or restricted; and
   presenting the specified reservation candidate vehicle to a user via a user terminal.

### BRIEF DESCRIPTION OF DRAWINGS

Fig. 1 is a schematic configuration diagram of a vehicle dispatch system.
Fig. 2 is a diagram schematically illustrating a configuration of a server.
Fig. 3 is a sequential diagram schematically illustrating a series of flows when a vehicle dispatch service dispatches vehicles.
Fig. 4 is a functional block diagram of the processor of the server according to a first embodiment.
Fig. 5 is a flow chart showing a flow of a vehicle presentation processing used for vehicle selection in the vehicle dispatch service.
Fig. 6 is a view showing an example of a vehicle selection screen displayed on the basis of a specified presentation mode.
Fig. 7 is a functional block-diagram of the processor of the server according to a second embodiment.
Fig. 8 is a flow chart showing a flow of a vehicle presentation processing used for vehicle selection in the vehicle dispatch service according to the second embodiment.
Fig. 9 is a view showing an example of the vehicle selection screen displayed on the basis of the specified presentation mode.

### DESCRIPTION OF EMBODIMENTS

Hereinafter, embodiments will be described in detail with reference to drawings. In the following description, the same reference numerals are given to similar constituent elements.

### First embodiment

### <Configuration of vehicle dispatch system>

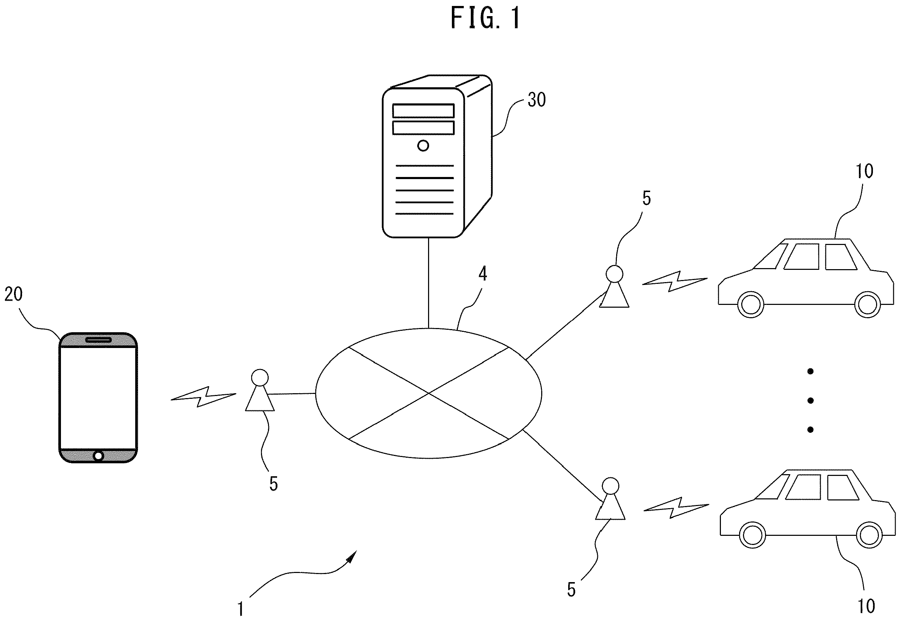

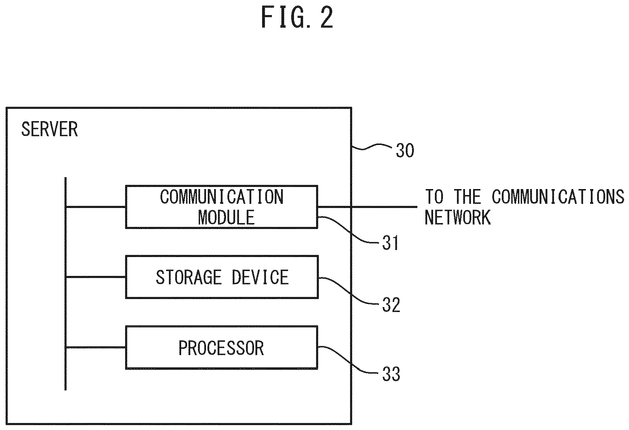

Referring to Figs. 1 and 2, the configuration of a vehicle dispatch system 1 according to a first embodiment will be described. Fig. 1 is a schematic configuration diagram of the vehicle dispatch system 1. The vehicle dispatch system 1 provides a vehicle dispatch service for arranging vehicles in response to user requests. The vehicle dispatch service includes a taxi service for picking up a user at a desired boarding point of the user, a car sharing service in which a plurality of users alternately use a vehicle on standby in a parking lot or the like, a rental car service in which a vehicle is rented to a user from a manned store, and the like.

As shown in Fig. 1, the vehicle dispatch service includes a plurality of vehicles 10, user terminals 20, and a server 30. The plurality of vehicles 10, user terminals 20, and the server 30 are configured to communicate with each other via a communication network 4 constituted by an optical communication line or the like and a wireless base station 5 connected to the communication network 4 via a gateway (not shown). The communication between the vehicles 10 and the user terminals 20 and the wireless base stations 5 may use various wide area wireless communication having a long communication range, and uses, for example, communication conforming to any communication standard such as 4G, LTE, 5G, WiMAX developed by 3GPP, IEEE.

The plurality of vehicles 10 are owned by a provider of the vehicle dispatch service, and a vehicle 10 provided to the users in the vehicle dispatch service is selected from the plurality of vehicles 10. Each of the plurality of vehicles 10 includes a communication device (not shown) that enables communication between the vehicle 10 and outside of the vehicle 10. The communication device of the vehicle 10 accesses the wireless base station 5 to connect to the communication network 4 via the wireless base station 5. The vehicle 10 transmits and receives data to and from the server 30 via the communication device.

In the present embodiment, the plurality of vehicles 10 includes EV incompatible vehicles that are not capable of traveling in an EV mode, and EV compatible vehicles that are capable of traveling using only a motor supplied with electric power from a battery as a drive source. The EV compatible vehicles include, for example, a hybrid vehicle (HEV) and a plug-in hybrid vehicle (PHEV) including an internal combustion engine and a motor as a drive source of the vehicle, and an electric vehicle (BEV) including only a motor as a drive source of the vehicle. On the other hand, the EV incompatible vehicles includes, for example, a vehicle having only an internal combustion engine as a drive source of the vehicle (a gasoline-powered vehicle, a diesel-powered vehicle, or the like).

Each of the user terminals 20 is, for example, a smart phone, a tablet terminal, a personal computer, or the like, and is owned by a user. Each of the user terminals 20 includes a processor that performs various processes on the user terminal 20, an input unit (a touch panel, an operation button, a microphone, a keyboard, a mouse, and the like), an output unit (a display, a speaker, and the like), and a communication unit. The communication unit accesses the wireless base station 5 to connect to the communication network 4 via the wireless base station 5. The user terminal 20 transmits and receives data to and from the server 30 via the communication unit.

When using the vehicle dispatch service, the user requests dispatch via the user terminal 20. For example, an application for the vehicle dispatch service is installed in the user terminal 20, and the user performs an input operation relating to the vehicle dispatch service in the application.

The server 30 is an example of a presentation device used for selecting vehicles in the vehicle dispatch service, and is managed by an operator providing the vehicle dispatch service. The server 30 is capable of communicating with the plurality of vehicles 10 and user terminals 20 via the communication network 4 and the wireless base stations 5.

Fig. 2 is a diagram schematically illustrating a configuration of the server 30. The server 30 includes a communication module 31, a storage device 32, and a processor 33. The communication module 31 and the storage device 32 are connected to the processor 33 via signal lines. Note that the server 30 may further include an input device such as a keyboard and a mouse, an output device such as a display and a speaker, and the like. The server 30 may include a plurality of computers.

The communication module 31 is an example of a communication unit that communicates with a device outside the server 30. The communication module 31 has an interface circuit for connecting the server 30 to the communication network 4. The communication module 31 is configured to communicate with the vehicles 10 and user terminals 20 via the communication network 4 and the wireless base stations 5.

The storage device 32 is an example of a storage unit that stores data. The storage device 32 includes, for example, a hard disk drive (HDD), a solid state drive (SDD), and/or an optical recording medium and an accessing device thereof. The storage device 32 may include a volatile semiconductor memory (for example, a RAM), a non-volatile semiconductor memory (for example, a ROM), and the like. The storage device 32 stores various kinds of data, and stores, for example, information on the vehicle 10, information on the user, map information (for example, a position of an engine restriction area to be described later, and the like), computer programs for the processor 33 to execute various kinds of processing, and various kinds of data used when various kinds of processing are executed by the processor 33.

The processor 33 includes one or more CPUs and peripheral circuitry thereof. The processor 33 may further include other arithmetic circuits, such as a logical operation unit, a numerical operation unit, or a graphics processing unit. The processor 33 executes various kinds of processing based on computer programs stored in the storage device 32.

### <Summary of vehicle dispatch service>

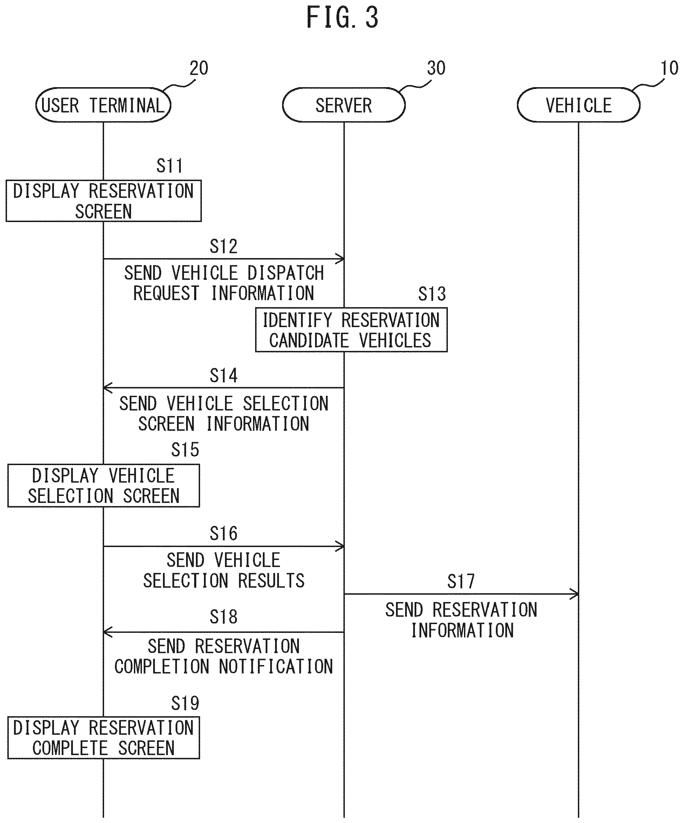

Referring to Fig. 3, a summary of the vehicle dispatch service provided by the vehicle dispatch system 1 will be described. Fig. 3 is a sequential diagram schematically illustrating a series of flows when dispatching is performed by the vehicle dispatch service. In this sequence diagram, communication between user terminals 20 and the server 30 and communication between the server 30 and the vehicles 10 are performed via the communication network 4 and the wireless base stations 5.

When the user launches an application for the vehicle dispatch service or accesses a website related to the vehicle dispatch service, the user terminal 20 displays a reservation window for the user to reserve vehicles (step S11). A field for inputting necessary items for dispatching a vehicle is provided on the reservation screen, and the user operates the user terminal 20 to input necessary items into the user terminal 20. For the taxi service, the required items are a desired boarding point, desired alighting point, desired boarding time, and the like. For the car sharing service and the rental car service, the required items are desired boarding point, use starting time, use ending time, and the like. Note that the map may be displayed on the user terminal 20, and the user may enter a desired boarding point, a desired alighting point, or the like by specifying a point on the map.

When the input of the required items is completed, the user terminal 20 transmits vehicle dispatch request information to the server 30 (step S12). The vehicle dispatch request information includes a desired boarding point, a desired alighting point, a desired boarding time, a use starting time, a use ending time, user information (user ID and the like), and the like. The user information is registered in advance by the user via the user terminal 20.

When the vehicle dispatch request information is transmitted from the user terminal 20 to the server 30, the server 30 specifies reservation candidate vehicles from the plurality of vehicles 10 based on the vehicle dispatch request information (step S13). Then, the server 30 transmits vehicle selection screen information including the information of the reservation candidate vehicles to the user terminal 20 (step S14).

When the vehicle selection screen information is transmitted from the server 30 to the user terminal 20, the user terminal 20 displays the vehicle selection screen (step S 15). In the vehicle selection screen, the reservation candidate vehicle is presented to the user, and the user selects a desired vehicle to be used from the reservation candidate vehicles.

When the user selects the vehicle to be used, the user terminal 20 transmits a vehicle selection result to the server 30 (step S16). Upon receiving the vehicle selection result, the server 30 transmits reservation information to the vehicle 10 reserved as the vehicle to be used (step S 17). The reservation information includes a desired boarding point, a desired boarding time, a use starting time, user information (user ID and the like), and the like. As a consequence, the reservation of the vehicles to be used is confirmed, and the server 30 transmit a reservation completion notification to the user terminal 20 (step S 18). When the reservation completion notification is transmitted from the server 30 to the user terminal 20, the user terminal 20 displays a reservation completion screen (step S 19). Thereafter, the user can get into the vehicle to be used by authenticating himself/herself using the user terminal 20 or a use card, when the use of the vehicle is started.

### <Process of Presenting Vehicle to User>

As described above, when using the vehicle dispatch service, the user can select a desired vehicle to be used, from reservation candidate vehicles. However, considering a scheduled travel route of the user, the characteristics of some vehicles may not meet the user's needs. For example, the scheduled travel route of the user may include an area in which driving of the internal combustion engine is prohibited or restricted while the vehicle is traveling therein (hereinafter referred to as "engine restriction area"). The engine restriction area is also referred to as a low emission zone (LEZ).

When the internal combustion engine is driven in such an engine restriction area, for example, a fine is imposed on drivers of vehicles. Therefore, when the engine restriction area is included in the scheduled travel route of the user, it is desirable that vehicles capable of traveling in the EV mode are dispatched. Therefore, in the present embodiment, when the reservation candidate vehicles are extracted in step S13 of Fig. 3, if the scheduled travel route of the vehicle according to the vehicle dispatch request of the user includes the engine restriction area, vehicles are specified as reservation candidate vehicles only when the vehicles are the EV compatible vehicles. Such processing is performed by the processor 33 of the server 30 as follows.

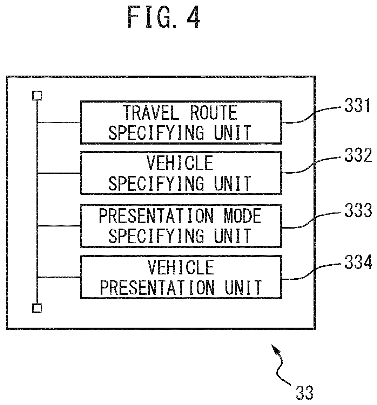

Fig. 4 is a functional block diagram of the processor 33 of the server 30 according to the first embodiment. As shown in Fig. 4, in the present embodiment, the processor 33 includes a travel route specifying unit 331, a vehicle specifying unit 332, a presentation mode specifying unit 333, and a vehicle presentation unit 334. These units included in the processor 33 of the server 30 are, for example, functional modules realized by computer programs running on the processor 33. Alternatively, these units included in the processor 33 may be realized by a dedicated arithmetic circuit provided in the processor 33.

The travel route specifying unit 331 specifies the scheduled travel routes for vehicles located in the vicinity of desired boarding point, when there is a vehicle dispatch request from the user. In particular, the travel route specifying unit 331 specifies the scheduled travel routes of the respective vehicles in accordance with the vehicle dispatch request information (the desired boarding point, desired alighting point, desired boarding time, use starting time, use ending time, and the like) from the user. Accordingly, the travel route specifying unit 331 specifies the scheduled travel routes of the respective vehicles according to the vehicle dispatch request from the user.

The vehicle specifying unit 332 specifies vehicles to be presented to the user as reservation candidate vehicles. In particular, the vehicle specifying unit 332 specifies the vehicles to be presented to the user as the reservation candidate vehicles, based on whether or not the scheduled travel route of the respective vehicle includes the engine restriction area and whether or not the vehicles are EV compatible vehicles.

The presentation mode specifying unit 333 specifies a presentation mode of the reservation candidate vehicles to the user. In the present embodiment, the presentation mode specifying unit 333 specifies, for example, an order or a display intensity of presenting a plurality of the reservation candidate vehicles, information to be displayed for the respective reservation candidate vehicles, and the like.

The vehicle presentation unit 334 generates, based on the specified presentation mode, vehicle selection screen information for the user to select a desired vehicle to be used from the reservation candidate vehicles. Then, the vehicle presentation unit 334 transmits vehicle selection screen information including the information of the reservation candidate vehicles to the user terminal 20. That is, the vehicle presentation unit 334 presents the reservation candidate vehicles to the user via the user terminal 20.

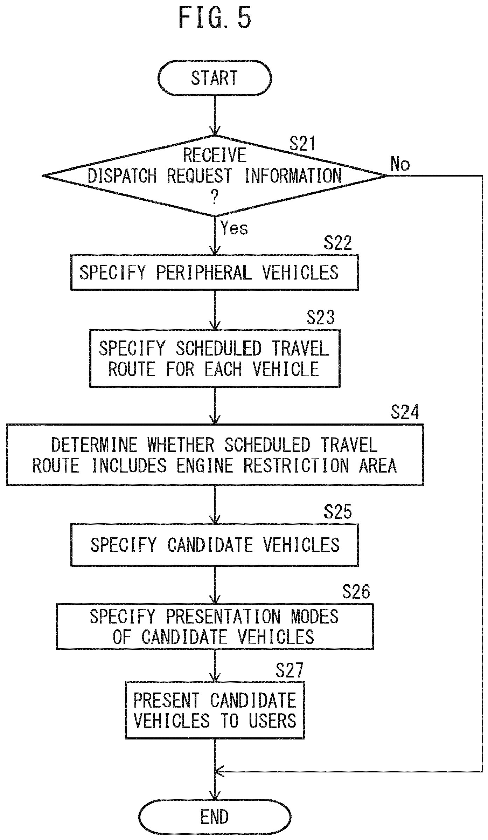

Fig. 5 is a flow chart showing a flow of a vehicle presentation processing used for vehicle selection in the vehicle dispatch service. The illustrated vehicle presentation processing is repeatedly executed by the processor 33 of the server 30 at predetermined time intervals. In particular, in the vehicle presentation processing, the reservation candidate vehicles is specified (step S13 in Fig. 3) and the vehicle selection screen is transmitted (step S14 in Fig. 3).

When the vehicle presentation processing is started, first, the vehicle presentation unit 334 determines whether or not a vehicle dispatch request information has been received (step S21). The vehicle dispatch request information is transmitted from the user terminal 20 to the server 30 in response to an operation by a user who wishes to use the vehicle dispatch service. The vehicle dispatch request information includes a desired boarding point, a desired alighting point, a desired boarding time, a use starting time, a use ending time, user information (user ID and the like), and the like. If it is determined in the step S21 that vehicle dispatch request information has not been received, the vehicle presentation processing ends.

If it is determined in step S21 that vehicle dispatch request information has been received, the vehicle specifying unit 332 specifies the vehicles 10 located in the vicinity of the desired boarding point included in the vehicle dispatch request information (step S22). Each of the vehicles 10 has a positioning sensor (for example, a GNSS receiver) that detects the self-position of the vehicle 10, and periodically transmits the self-position detected by the positioning sensor to the server 30. The vehicle specifying unit 332 of the server 30 specifies any number of vehicles 10 having a close distance (a linear distance or a distance along roads) between the desired boarding point and the self-positions received from the respective vehicles 10.

The vehicle specifying unit 332 may further specifies the vehicles 10 that are not being providing the vehicle dispatch service. The vehicle 10 being providing the vehicle dispatch service includes, for example, a vehicle being transporting a passenger by a taxi service, a vehicle being used by a user by a sharing service or a rental car service, a vehicle for which the vehicle dispatch service has been reserved, and the like. Thus, in this instance, if it is determined that the vehicle dispatch request information has been received, the vehicle specifying unit 332 specifies the vehicles 10 located around desired boarding point and not being providing the vehicle dispatch service.

When the vehicles 10 around desired boarding point is specified in the step S22, the travel route specifying unit 331 specifies a scheduled travel route of each of the specified vehicles 10 according to vehicle dispatch request information from the user (step S23). When the travel route specifying unit 331 includes the vehicle dispatch request information including the desired boarding point and desired alighting point, the travel route specifying unit 331 specifies, as scheduled travel route, a route from the position of each of the vehicles 10 at the time when the vehicle dispatch request information is transmitted from the user terminal 20 to the server (at the time of reservation) to the desired alighting point through the desired boarding point. At this time, the travel route specifying unit 331 may specify a plurality of routes to the desired alighting point. In this instance, the travel route specifying unit 331 specifies a plurality of scheduled travel routes such that, for example, the total travel time to desired alighting point, the total power consumption (or the total fuel consumption) to desired alighting point, and the like fall within a predetermined range.

If the scheduled travel routes from the desired boarding point to the desired alighting point is common to all vehicles 10, the travel route specifying unit 331 does not need to specify a route for each vehicle 10, and may specify only one common route to all vehicles 10.

In addition, the travel route specifying unit 331 specifies a route from the position of each of the vehicles 10 at the time of reservation to a desired boarding point as the scheduled travel route when the vehicle dispatch request information includes the desired boarding point but does not include a desired alighting point. At this time, the travel route specifying unit 331 may specify a plurality of routes to the desired boarding point. In this instance, the travel route specifying unit 331 specifies a plurality of the scheduled travel routes such that, for example, the total travel time to the desired boarding point, the total power consumption (or the total fuel consumption) to the desired boarding point, and the like fall within a predetermined range.

When the scheduled travel route of each vehicle 10 is specified in step S23, the vehicle specifying unit 332 determines whether the engine restriction area is included in the specified scheduled travel route of each vehicle 10 (step S24). The vehicle specifying unit 332 compares the position of engine restriction area stored in the storage device 32 with the scheduled travel route of each vehicle 10 to determine whether or not the engine restriction area is included in the scheduled travel route. In the present embodiment, if a part of a scheduled travel route includes engine restriction area, the vehicle specifying unit 332 determines that the engine restriction area is included in the scheduled travel route. Note that the vehicle specifying unit 332 may determine whether or not the engine restriction area is included in the scheduled travel route only for EV non-conforming vehicles.

When it is determined whether or not the scheduled travel route includes the engine restriction area, the vehicle specifying unit 332 specifies reservation candidate vehicles to be presented to the user as reservation candidates (step S25). The vehicle specifying unit 332 includes EV compatible vehicles among the vehicles 10 specified in the step S22 in the reservation candidate vehicles, regardless of whether or not the engine restriction area is included in the scheduled travel routes thereof. In addition, the vehicle specifying unit 332 includes EV non-conforming vehicle among the vehicles 10 specified in the step S22 in the reservation candidate vehicles only when the engine restriction area is not included in the scheduled travel route. Therefore, in the present embodiment, the vehicle specifying unit 332 specifies, for each vehicle 10 specified in the step S22, the vehicle 10 as the reservation candidate vehicle only when the vehicle 10 is EV compatible vehicle, if the scheduled travel route thereof includes the engine restriction area.

In addition, when a plurality of scheduled travel routes are specified in the respective vehicles 10 by the travel route specifying unit 331, it is determined whether or not to specify the vehicle 10 as a reservation candidate vehicle, based on whether or not the engine restriction area is included in all of the scheduled travel routes of the vehicle 10. Accordingly, the vehicle specifying unit 332 specifies, for each vehicle 10 specified in the stepping S22, the vehicle 10 as the reservation candidate vehicle only when the vehicle 10 is EV compatible vehicle if all of the scheduled travel routes include the engine restriction area. On the other hand, when the engine restriction area is not included in a part of the scheduled travel routes for each vehicle 10 specified in the step S22, the vehicle specifying unit 332 specifies the vehicle 10 as a reservation candidate vehicle regardless of whether the vehicle 10 is an EV compatible vehicle or an EV incompatible vehicle.

When a plurality of scheduled travel routes are specified in each of the vehicles 10 by the travel route specifying unit 331, it may be determined whether or not to specify the vehicle 10 as a reservation candidate vehicle, based on whether or not the engine restriction area is included in the scheduled travel routes of the predetermined ratio of the vehicle 10. In this case, the vehicle specifying unit 332 specifies, for each vehicle 10 specified in the step S22, the vehicle 10 as a reservation candidate vehicle only when the vehicle 10 is EV compatible vehicle, if the engine restriction area is included in the scheduled travel routes of a predetermined fraction (e.g., fifth fraction) among the specified plurality of scheduled travel routes.

Alternatively, when a plurality of the scheduled travel routes are specified in each of the vehicles 10 by the travel route specifying unit 331, it may be determined whether or not to specify the vehicle 10 as a reservation candidate vehicle, based on whether or not the engine restriction area is included in at least one scheduled travel route of the vehicle 10. In this case, when the engine restriction area is included in at least one scheduled travel route among the plurality of specified scheduled travel routes for each vehicle 10 specified in the step S22, the vehicle specifying unit 332 specifies the vehicle 10 as a reservation candidate vehicle only when the vehicle 10 is an EV compatible vehicle.

When the reservation candidate vehicles to be presented to the user as the reservation candidates are specified, the presentation mode specifying unit 333 specifies presentation modes to the user of the reservation candidate vehicles (step S26). In the present embodiment, the presentation mode specifying unit 333 specifies priorities for presenting the reservation candidate vehicles, based on, for example, the distance between the self-position of the vehicle 10 and scheduled boarding point at the time of reservation, the time or energy (power consumption or fuel consumption) required for the vehicle 10 to reach scheduled boarding point, etc. For example, the presentation mode specifying unit 333 specifies presentation modes such that the closer the self-position of the vehicles 10 in reservation candidate vehicles is to the scheduled boarding point, the more highlighted it is displayed. Specifically, the presentation mode specifying unit 333 specifies presentation modes such that the closer the self-position of the vehicles 10 to scheduled boarding point, the smaller the number assigned to the vehicle, or the stronger the display intensity (lightness, brightness, saturation, and the like). As described above, by preferentially displaying the vehicle 10 close to scheduled boarding point, it is possible to reduce the energy consumed by the vehicle 10 to scheduled boarding point.

The presentation mode specifying unit 333 may specify presentation modes based on other parameters. For example, the presentation mode specifying unit 333 may specify priorities for presenting reservation candidate vehicles, based on whether or not the vehicles 10 are rechargeable vehicle that can be charged by an external power source. The rechargeable vehicle includes a plug-in hybrid vehicle (PHEV) and an electric vehicle (BEV), and a non-rechargeable vehicle that cannot be charged by an external power source includes a hybrid vehicle (HEV).

In this case, when the scheduled travel route of the vehicle 10 includes the engine restriction area, the presentation mode specifying unit 333 specifies presentation modes so as to preferentially present rechargeable vehicle as compared with a case where the scheduled travel route of the vehicle 10 does not include engine restriction area. Specifically, for example, when the engine restriction area is included in the scheduled travel route of the vehicle 10, the presentation mode specifying unit 333 specifies presentation modes such that the rechargeable vehicle of reservation candidate vehicles is displayed in a highlighted manner. On the other hand, when the engine restriction area is not included in scheduled travel route of the vehicle 10, the presentation mode specifying unit 333 specifies presentation modes, based on the distance between the self-position of the vehicle 10 at the time of reservation and scheduled boarding point, regardless of whether or not the reservation candidate vehicle is rechargeable vehicle. In addition, when the reservation candidate vehicles includes both the vehicles including and not including the engine restriction area in the scheduled travel route, the presentation mode specifying unit 333 specifies presentation modes so as to preferentially present one of the vehicles to the user. In this case, the presentation mode specifying unit 333 may specify presentation modes so as to preferentially present the vehicle including the engine restriction area in the scheduled travel route, or may specify presentation modes so as to preferentially present the vehicle not including the engine restriction area in the scheduled travel route.

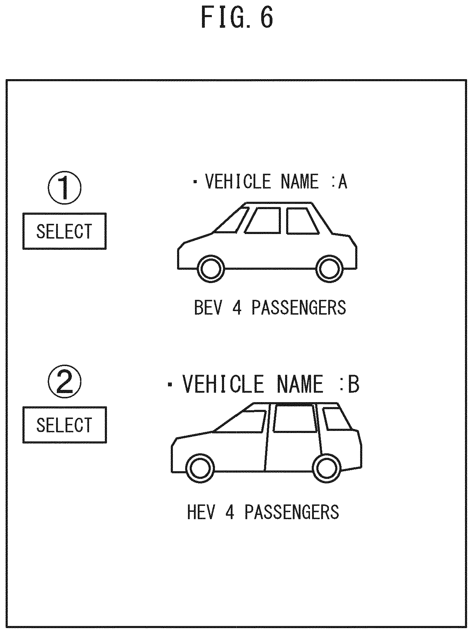

Fig. 6 is an example of a vehicle selection screen displayed on the basis of the specified presentation mode. In Fig. 6, the number assigned to the rechargeable vehicle in the reservation candidate vehicles is small, and thus the rechargeable vehicle is highlighted. If the scheduled travel route includes an engine restriction area, it is desirable that the battery of the vehicle 10 is rechargeable by an external power source in preparation for when a remaining amount of power of the battery is reduced, and thus the user can be prompted to select a vehicle more suitable for scheduled travel route of the user.

When the presentation mode is specified in the step S26, the vehicle presentation unit 334 presents the reservation candidate vehicles to the user via the user terminal 20, based on the specified presentation mode (step S27). As a specific processing, the vehicle presentation unit 334 generates the vehicle selection screen information according to presentation mode specified in the step S26, and transmits the vehicle selection screen information to the user terminal 20.

As described above, in the present embodiment, when the engine restriction area is included in the scheduled travel route of the vehicle 10, the vehicle is specified as reservation candidate vehicles only when the vehicle is an EV compatible vehicle. Therefore, according to the present embodiment, when the vehicle dispatch service is used by the user, candidates for vehicles suitable for the scheduled travel route of the user are presented to the user.

### Second embodiment

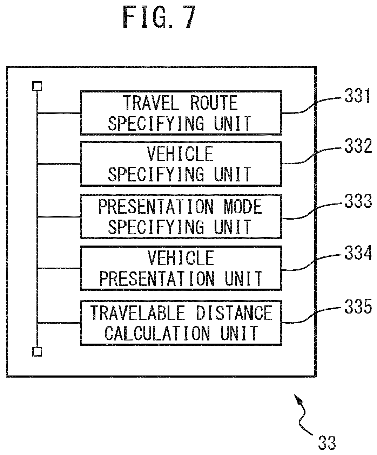

Next, a presentation device according to a second embodiment will be described referring to Figs. 7-9. A configuration and control of the presentation device according to the second embodiment are basically the same as the configuration and control of the presentation device according to the first embodiment, except for the points described below. Therefore, the second embodiment will be mainly described below with respect to portions different from those of the first embodiment.

In the above embodiment, the presentation mode specifying unit 333 specifies a presentation mode to the user of the reservation candidate vehicle, based on the distance between the self-position of the vehicle 10 and the scheduled boarding point, the time or energy required for the vehicle 10 to reach the scheduled boarding point, or whether the vehicle 10 is a rechargeable vehicle that can be charged by an external power source. On the other hand, in the present embodiment, the presentation mode specifying unit 333 specifies a presentation mode to the user of the reservation candidate vehicle, based on the distance that can be traveled by the motor according to remaining amount of power of the battery of the vehicle 10 and/or the distance that can be traveled when the battery of the vehicle 10 is fully charged.

Fig. 7 is a functional diagram of the processor 33 of the server 30 according to the second embodiment. In the second embodiment, the processor 33 includes a travelable distance calculation unit 335, in addition to the travel route specifying unit 331, the vehicle specifying unit 332, the presentation mode specifying unit 333, and the vehicle presentation unit 334. These units included in the processor 33 of the server 30 are, for example, functional modules realized by computer programs running on the processor 33. Alternatively, these units included in the processor 33 may be realized by a dedicated arithmetic circuit provided in the processor 33.

The travelable distance calculation unit 335 calculates a range that can be traveled by the motor of the vehicle 10 according to remaining amount of power of the battery of the vehicle 10 (for example, a SOC (State of Charge) of the battery). For example, the travelable distance calculation unit 335 calculates a distance that the vehicle 10 can travel by the motor based on remaining amount of power of the battery of the vehicle 10 and the distance that the vehicle 10 can travel per unit electric storage capacity.

In particular, in the present embodiment, the travelable distance calculation unit 335 calculates, as the distance travelable by the motor, an estimate of distance travelable by the motor when the user starts using the vehicle 10. For example, the travelable distance calculation unit 335 calculates an estimate of distance that can be traveled by the motor of the vehicle 10 at the start of use by the user, based on a remaining amount of power of the battery of the vehicle 10 at the start of use by the user and the distance that can be traveled per unit electric storage amount of the vehicle 10.

Specifically, the travelable distance calculation unit 335 calculates the amount of electric power consumed to travel from the self-position of the vehicle 10 to the desired boarding point, at the time when the vehicle dispatch request information is transmitted from the user terminal 20 to the server (at the time of reservation). Further, when the vehicle 10 has time from the scheduled time when the vehicle 10 reaches the desired boarding point to the desired boarding time, the travelable distance calculation unit 335 calculates an amount of electric power consumed while the vehicle 10 stands by in the vicinity of desired boarding point. The total amount of electric power calculated in this way (hereinafter, referred to as "total electric power consumption") represents an amount of electric power consumed by the vehicle 10 from the time of reservation to the time of start of use. The travelable distance calculation unit 335 calculates an estimate of remaining amount of power of the battery of the vehicle 10 at the time of start of use by the user, by subtracting the electric power consumed until the time of start of use of the vehicle 10 from remaining amount of power of the battery of the vehicle 10 at the time of reserve. Then, the travelable distance calculation unit 335 calculates an estimate of distance travelable by the motor at the start of use of the vehicle 10 by the user, on the basis of the estimate of remaining amount of power of the battery at the start of use of the vehicle 10 by the user and the distance travelable per unit electric storage amount of the vehicle 10.

A present value of remaining amount of power of the battery (e.g., the SOC of the battery) is detected and calculated in the respective EV compatible vehicle in a known manner, and is periodically transmitted from the EV compatible vehicle to the server 30 via the communication network 4. The travelable distance calculation unit 335 acquires the remaining amount of power of the battery of each vehicle 10 at the time of reservation, based on the present value of remaining amount of power received from each EV compatible vehicle in this manner.

The travelable distance calculation unit 335 may calculate an estimate of remaining amount of power of the battery of the vehicle 10 at the start of use, based on the amount of electric power charged until the start of use, in addition to the remaining amount of power of the battery of the vehicle 10 at the time of reserving and the amount of electric power consumed until the start of use by the user. Specifically, for example, when the EV compatible vehicle is chargeable by an external power supply provided in the desired boarding point or the like, the travelable distance calculation unit 335 calculates an amount of the charged power, based on the charge capacity (for example, chargeable power) of the external power supply, the predicted charge duration, and the like. In addition, when the vehicle 10 is a vehicle capable of generating electric power such as a hybrid vehicle (HEV) or a plug-in hybrid vehicle (PHEV), and the scheduled travel route to the desired boarding point includes an area outside the engine restriction area, the electric energy charged in the battery is calculated in accordance with the electric power generated by the internal combustion engine of the vehicle 10.

In addition, the travelable distance calculation unit 335 may calculate an estimate of distance that can be traveled by the motor at present (at the time of reservation) as a distance that can be traveled by the motor. In this case, travelable distance calculation unit 335 calculates an estimate of distance that can be traveled by the motor at the present (at the time of reservation) based on the current remaining amount of power of the battery of the vehicle 10 and the distance that can be traveled per unit storage amount.

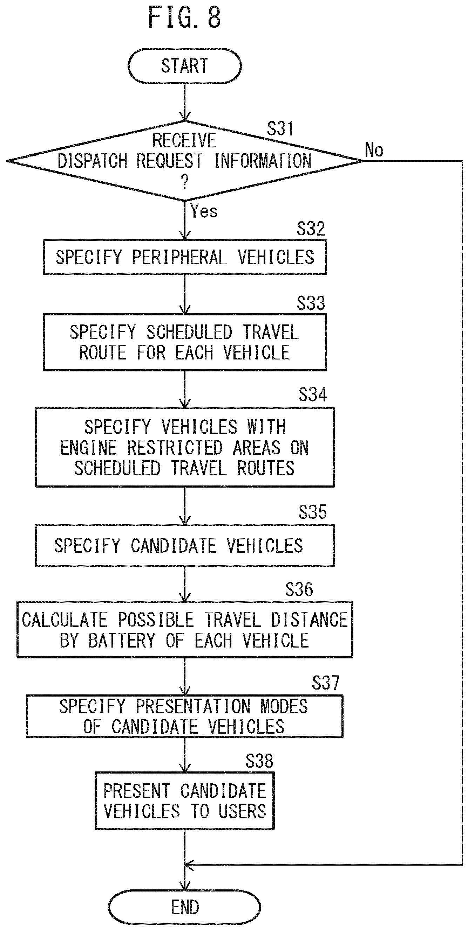

Fig. 8 is a flow chart showing a flow of a vehicle presentation processing used for vehicle selection in the vehicle dispatch service according to the second embodiment. The illustrated vehicle presentation processing is repeatedly executed by the processor 33 of the server 30 at predetermined time intervals. Note that since steps S3 1-S35, S38 in Fig. 8 are similarly to steps S21-S25 and S27 in Fig. 5 respectively, the explanation thereof will be omitted.

When the reservation candidate vehicles to be presented to the user as the reservation candidates are specified in the step S35, the travelable distance calculation unit 335 calculates, for the respective reservation candidate vehicles, the distance that can be traveled by the battery (step S36). As described above, the travelable distance calculation unit 335 calculates the distance that each of the reservation candidate vehicles can travel by the battery, based on the remaining amount of power at the time of reservation of the reservation candidate vehicle, the amount of electric power consumed by the reservation candidate vehicle from the time of reservation to the time of start of use, and the distance that the reservation candidate vehicle can travel per unit electric storage amount.

In step S36, when the distance that can be traveled by the battery is calculated for each of the reservation candidate vehicles, the presentation mode specifying unit 333 specifies presentation modes of reservation candidate vehicles to the user (step S37).

Incidentally, when an engine restriction area is included in a scheduled travel route of the user, it is required to avoid insufficient power of the battery in the engine restriction area as much as possible. Therefore, in the present embodiment, the presentation mode specifying unit 333 specifies a presentation mode, based on the distance travelable by the motor of the vehicle 10 according to a remaining amount of power of the battery, which is calculated by the travelable distance calculation unit 335. In particular, in the present embodiment, when the scheduled travel route of each vehicle 10 includes engine restriction area, the presentation mode specifying unit 333 specifies a presentation mode so as to preferentially present the user with the vehicle 10 having a longer travelable distance by the motor according to the remaining amount of power of the battery, compared to when the scheduled travel route of each vehicle 10 does not include engine restriction area. Accordingly, it is possible to prompt the user to select an EV compatible vehicle having a long travelable distance as the vehicle to be used, and it is possible to suppress insufficient power of the battery for traveling in the EV mode in an engine restriction area.

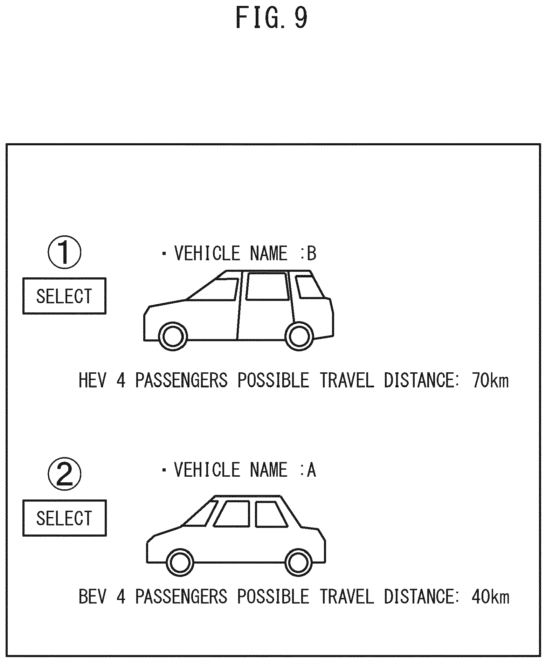

Specifically, when a scheduled travel route of each vehicle 10 includes an engine restriction area, the presentation mode specifying unit 333 specifies a presentation mode such that the longer the distance that the motor according to remaining amount of power of the battery can travel is, the more highlighted the vehicle 10 is displayed in, compared to when the scheduled travel route of each vehicle 10 does not include the engine restriction area. Fig. 9 is an example of a vehicle selection screen displayed on the basis of the specified presentation mode. In Fig. 9, a number assigned to a vehicle having a long distance travelable by the motor is small, and therefore, a vehicle having a long distance travelable by the motor is displayed in a highlighted manner. Note that when the engine restriction area is not included in the scheduled travel route of the vehicles 10, the presentation mode specifying unit 333 specifies a presentation mode, for example, based on the energy required for the vehicle 10 to reach the scheduled boarding point, regardless of the distance that can be traveled by the motor.

Note that the presentation mode specifying unit 333 may specify a presentation mode, based on whether or not the vehicle 10 is a rechargeable vehicle, in addition to the distance that can be traveled by the motor according to the remaining amount of power of the battery. In this instance, the presentation mode specifying unit 333 specifies a presentation mode so as to preferentially present the user with a rechargeable vehicle having a longer distance that can be traveled by the motor according to the remaining amount of power of the battery.

Further, the presentation mode specifying unit 333 may specify a presentation mode based on the distance that can be traveled by the motor when the battery is fully charged, rather than the distance that can be traveled by the motor according to the remaining amount of power of the battery. In this case, for example, when the scheduled travel route of each vehicle 10 includes the engine restriction area, the presentation mode specifying unit 333 specifies a presentation mode so as to preferentially present the user with the vehicle 10 having the longer distance that can be traveled by the motor when the battery is fully charged, compared to when the scheduled travel route of each vehicle 10 does not include the engine restriction area. As a result, it is possible to prompt the user to select an EV compatible vehicle having a long travelable distance as the vehicle to be used, even considering charge of the battery may be performed, and it is possible to suppress insufficient power of the battery for traveling in the EV mode in engine restriction area.

In this case, specifically, when the scheduled travel route of each vehicle 10 includes the engine restriction area, the presentation mode specifying unit 333 specifies a presentation mode such that the longer the distance that can be traveled by the motor when the battery is fully charged, the more highlighted the vehicle 10is displayed in, compared to when the scheduled travel route of each vehicle 10 does not include the engine restriction area. The distance that can be traveled by the motor when the battery is fully charged is calculated, based on the amount of electric power when each vehicle 10 is fully charged and the distance that can be traveled per unit electric storage amount of each vehicle 10.

The presentation mode specifying unit 333 may specify a presentation mode based on the distance that can be traveled by the motor according to the remaining amount of power of the battery and/or whether the vehicle 10 is rechargeable vehicle, in addition to the distance that can be traveled by the motor when the battery is fully charged. In this instance, the presentation mode specifying unit 333 specifies a presentation mode, for example, so as to preferentially present to the user a rechargeable vehicle having a longer distance that can be traveled by the motor when the battery is fully charged and a longer distance that can be traveled by the motor according to the remaining amount of power of the battery.

While preferred embodiments according to the present disclosure have been described above, the present disclosure is not limited to these embodiments, and various modifications and changes can be made within the scope of the claims. For example, the vehicle 10 used in the vehicle dispatch service may be an autonomous vehicle in which all of acceleration, steering, and deceleration (braking) of the vehicle 10 are automatically controlled. In this situation, the vehicle 10 selected as the vehicle to be used moves to the desired boarding point designated by the user by autonomous traveling.

## Claims

1. A presentation device used for selecting a vehicle (10) in a vehicle dispatch service, the device comprising:
a travel route specifying unit (331) for specifying a scheduled travel route of each vehicle (10) according to a vehicle dispatch request from a user;
a vehicle specifying unit (332) for specifying a vehicle (10) as a reservation candidate vehicle, only when the vehicle (10) is an EV compatible vehicle capable of EV running using a motor powered by a battery, if the specified scheduled travel route of each vehicle (10) includes an area in which driving of an internal combustion engine is prohibited or restricted; and
a vehicle presentation unit (334) for presenting the specified reservation candidate vehicle to a user through a user terminal.

2. The presentation device according to claim 1, wherein the travel route specifying unit (331) specifies a plurality of the scheduled travel routes for each vehicle (10), and
when the area is included in all the scheduled travel routes of each vehicle (10), the vehicle specifying unit (332) specifies the vehicle (10) as a reservation candidate vehicle, only when the vehicle (10) is an EV compatible vehicle.

3. The presentation device according to claim 1 or 2, wherein the travel route specifying unit (331) specifies a plurality of the scheduled travel routes for each vehicle (10), and
when the area is not included in a part of the scheduled travel routes, the vehicle specifying unit (332) specifies the vehicle (10) as a reservation candidate vehicle, even if the vehicle (10) is not an EV compatible vehicle.

4. The presentation device according to any one of claims 1 to 3, further comprising a presentation mode specifying unit (333) for specifying a presentation mode of the reservation candidate vehicle, wherein
the vehicle presentation unit (334) presents the reservation candidate vehicle based on the specified presentation mode, and
the presentation mode specifying unit (333) specifies the presentation mode so as to preferentially present a chargeable vehicle capable of charging a battery, which supplies power to the motor, by an external power source, if the area is included in the scheduled travel route of the vehicle (10), compared to if the area is not included in the scheduled travel route of the vehicle (10).

5. The presentation device according to any one of claims 1 to 4, further comprising a presentation mode specifying unit (333) for specifying a presentation mode of the reservation candidate vehicle, wherein
the vehicle presentation unit (334) presents the reservation candidate vehicle based on the specified presentation mode, and
the presentation mode specifying unit (333) specifies the presentation mode so as to preferentially present an EV compatible vehicle having a longer travelable distance by the motor depending on the remaining amount of power, if the area is included in the scheduled travel route of the vehicle (10), compared to if the area is not included in the scheduled travel route of the vehicle (10).

6. The presentation device according to claim 5, further comprising a travelable distance calculation unit (335) for calculating an estimated value of distance travelable by the motor when the user starts using the EV compatible vehicle, as a distance travelable by the motor.

7. The presentation device according to claim 6, wherein the travelable distance calculation unit (335) calculates an estimated value of the remaining amount of power of the battery at a start of use of the EV compatible vehicle by the user by subtracting an amount of electric power consumed until the start of use from a present remaining amount of power of a battery of the EV compatible vehicle, and an estimated value of distance travelable by the motor at the start of use of the EV compatible vehicle is calculated based on the calculated estimated value of the remaining amount of power.

8. The presentation device according to any one of claims 1-7, further comprising a presentation mode specifying unit (333) for specifying a presentation mode of the reservation candidate vehicle, wherein
the vehicle presentation unit (334) presents the reservation candidate vehicle based on the specified presentation mode, and
the presentation mode specifying unit (333) specifies the presentation mode so as to preferentially present the EV compatible vehicle having a longer travelable distance by the motor when the battery is fully charged, if the area is included in the scheduled travel route of the vehicle (10), compared to if the area is not included in the scheduled travel route of the vehicle (10).

9. A presentation method used for selecting a vehicle in a vehicle dispatch service, the method comprising:
specifying a scheduled travel route of each vehicle (10) according to a vehicle dispatch request from a user;
specifying a vehicle (10) as a reservation candidate vehicle, only when the vehicle (10) is an EV compatible vehicle capable of EV running using only a motor powered by a battery, if the specified scheduled travel route of each vehicle (10) includes an area in which driving of an internal combustion engine is prohibited or restricted; and
presenting the specified reservation candidate vehicle to a user via a user terminal.

10. A presentation program used for selecting a vehicle in a vehicle dispatch service, causing a computer to execute:
specifying a scheduled travel route of each vehicle (10) according to a vehicle dispatch request from a user;
specifying a vehicle (10) as a reservation candidate vehicle, only when the vehicle (10) is an EV compatible vehicle capable of EV running using only a motor powered by a battery, if the specified scheduled travel route of each vehicle (10) includes an area in which driving of an internal combustion engine is prohibited or restricted; and
presenting the specified reservation candidate vehicle to a user via a user terminal.
